# EUROPEAN PATENT APPLICATION

(11) **EP 1 335 574 A1**
(43) Date of publication of application: **13.08.2003**
(21) Application number: 01976876.1
(22) Date of filing: 30.10.2001
(51) Int. Cl.: H04N 1/00, H04N 1/411, H04K 1/00, H04L 9/34, H04L 29/04, G06T 3/00, G01C 21/26, G08G 1/096, G08G 1/0969

(54) **INFORMATION TRANSMITTING/RECEIVING SYSTEM, INFORMATION TRANSMITTING/RECEIVING METHOD, AND HANDWRITTEN INFORMATION COMPRESSING METHOD USED FOR THEM**

(30) Priority: 30.10.2000 JP 2000330224
(71) Applicant: MATSUSHITA ELECTRIC INDUSTRIAL CO., LTD, Kadoma-shi, Osaka 571-0000 (JP)
(72) Inventor: TAKAYANAGI, Yuichi, Tsurumi-ku, Yokohama-shi, Kanagawa 230-0 (JP)
(74) Representative: Casalonga, Axel
(86) International application number: JP0109513
(87) International publication number: WO02037831

(57) **Abstract**

The present invention provides an information transmitting/receiving system, by which it is possible to receive all information data by putting priority rank to the information when all information data cannot be transmitted at one time due to a limitation in the communication means. The information transmitting/ receiving system comprises handwritten information extracting means 405 for dividing the information to a set of a plurality of data, a data transmission setting unit 406 for setting a timing to transmit a plurality of divided data to a plurality of data transmitting units, communication units 402 for transmitting the divided data from an information data transmitting unit 407 via a transmitting/receiving server 416, and a mobile information system 403, which comprises a handwritten/image data receiving unit 410 for receiving the data, a handwritten/ image data processing unit 411 for restoring the received data to the initial information, and a handwritten/image data display unit 412.

## Description

### TECHNICAL FIELD

The present invention relates to an information transmitting/receiving system and an information transmitting receiving method for efficiently transmitting various types of information such as handwritten information, image information, etc. by using optical beacon or electric wave beacon, or other communication means. The invention also relates to a method for compressing handwritten information used in the above system and the method. In particular, the present invention relates to an information transmitting/receiving system and an information transmitting/receiving method, by which it is possible to efficiently transmit and receive information when there is a limitation to data amount to be transmitted at one time due to a limitation in the capacity of the communication means, and the invention also relates to a method for compressing handwritten information to be used in the above system and the method.

### BACKGROUND ART

As typically represented by VICS (Vehicle Information Communication System), a communication transmitting system for road traffic information is now being developed. This system connects a vehicle-loaded system such as a vehicle-loaded navigation system with traffic control center via communication network and provides traffic information to the vehicle-loaded system from the traffic control center. This is accomplished by the use of communication means (beacon system) installed along the road or by the use of FM multiplex communication.

A system is now under development, by which an image data corresponding to an image taken by a monitor camera or a handwritten information from the traffic control center is transmitted via a beacon system to a vehicle-loaded system. For instance, JP-A-9-180087 describes a technique, by which a condition at an intersection taken by monitor camera or traffic congestion status at a specific trunk road is transmitted from the traffic control center via beacon system, and the information is displayed as an image on a display unit on a vehicle-loaded system.

However, in a conventional type system to transmit handwritten information or image information via optical beacon or electric wave beacon, there have been such problems that handwritten information from a center unit at the traffic control center must be compressed and reduced in size to suit processing capability of the center unit. This is because an amount of information to be handled at one time by optical beacon or electric wave beacon is limited to 10 KB at the most in data communication.

### DISCLOSURE OF THE INVENTION

To solve the above problems, it is an object of the present invention to provide an information transmitting/ receiving system, an information transmitting/receiving method, and a method for compressing handwritten information used in such system and method, by which it is possible to transmit and receive the data of the handwritten information or the image information without changing the processing capability of the handwritten information extracting means at the center unit and without the need to compress the handwritten information to be transmitted.

The present invention provides an information transmitting/receiving system, which comprises a center unit, said center unit comprising handwritten information input means for converting a handwritten information to an electric information, handwritten information extracting means for extracting a necessary part from said electric information converted by said handwritten information input means, a communication server for processing the extracted information extracted by said handwritten information extracting means, and handwritten information storage means for storing said extracted information extracted by said handwritten information extracting means under control of said communication server, said information transmitting/ receiving system further comprising a transmitting/ receiving server connected to said communication server, communication means on a passage connected to said transmitting/receiving server, and a mobile information system for receiving a communication information from said center unit via said transmitting/receiving server and said communication means, whereby said extracted information is divided to a plurality of data at said communication server and is transmitted to said communication means via said transmitting/receiving server as said communication information, and said mobile information system receives said communication information. By this arrangement, a handwritten information can be transmitted and received by transmission via communication means which has a limitation in the capacity of data communication, e.g. via optical beacon or electric wave beacon without compressing the handwritten information.

Also, the present invention provides an information transmitting/receiving system as described above, wherein an image information taken by image information acquisition means installed at a plurality of locations is stored in said communication server via said communication means and said transmitting/receiving server, said image information is divided to a plurality of data by said communication server and is transmitted to said communication means via said transmitting/receiving server as said communication information, and said mobile information system acquires said image information by receiving said communication information. By this arrangement, not only a handwritten information but also an image information can be received and displayed.

Further, the present invention provides an information transmitting/receiving system as described above, wherein said communication server divides said extracted information and sequentially transmits said information from a plurality of said communication means in a predetermined order via said transmitting/receiving server, and said mobile information system receives from said communication means said communication information transmitted from said center unit via said communication means according to the order of transmission. By this arrangement, all of the divided information data can be acquired.

Also, the present invention provides an information transmitting/receiving system as described above, wherein said communication server divides said extracted information and transmits in an arbitrary order the information from a plurality of said communication means, said mobile information system receives said communication information from said center unit, and said mobile information system restores said communication information. By this arrangement, it is possible to restore the data in the course of the receiving step, and the initial data can be ultimately restored in its entirety.

Further, the present invention provides an information transmitting/receiving system as described above, wherein said handwritten information extracting means decomposes said electric information converted by said handwritten information input means, and recognizes degree of importance of each of the decomposed data. By this arrangement, an information of higher importance can be transmitted and received with priority.

Also, the present invention provides an information transmitting/receiving system as described above, wherein said handwritten information extracting means converts and processes said electric information converted by said handwritten information input means either to bit map format or to compression vector format, and the information is outputted to said communication server as said extracted information. By this arrangement, it is possible to transmit and receive information data having different data format.

Further, the present invention provides an information transmitting/receiving system as described above, wherein map display means is provided on said mobile information system, at least one of a map data possessed by said map display means or a map data acquired via the communication means is combined with said communication information received by said mobile information system, and the combined information is displayed on said mobile information system. By this arrangement, it is possible to combine the handwritten information with map information and to display.

Also, the present invention provides an information transmitting/receiving system as described above, wherein said center unit transmits a recommended route information for sequentially receiving said communication information divided to a plurality of data via said transmitting/ receiving server and said communication means, and said mobile information system combines said communication information with said recommended route information and displays the combined information on said mobile information system. By this arrangement, handwritten information and recommended route information can be combined and displayed.

Further, the present invention provides an information transmitting/receiving system as described above, wherein said handwritten information input means expresses a handwritten information by said handwriting input by a set of a start point data and an end point data and further expresses a data between said start point data and said end point data by a middle point data and a differential information, and said handwritten information is converted to said electric information. By this arrangement, handwritten information can be compressed by data compression and handwritten information can be efficiently transmitted.

Also, the present invention provides an information transmitting/receiving method, which comprises, on the transmitting side, the steps of decomposing an information to be transmitted to a plurality of data adding priority rank to said decomposed data and rearranging the data, adding said decomposed data and judging which of the added data and a preset data amount is larger, and transmitting the decomposed data to an extent not to exceed the preset data amount, and, on the receiving side, the steps of receiving data from said transmitting side, rearranging and restoring and processing the received data to an information closer to the decomposed initial data, and displaying said restored information. By this method, the transmitting side can transmit the important information needed only once and the receiving side can receive this information in case there is a limitation to data size to be transmitted or received at one time.

Further, the present invention provides an information transmitting/receiving method, which comprises, on the transmitting side, the steps of dividing an information to be transmitted to a set of a plurality of data, setting a timing to transmit said divided data to a plurality of communication means and setting allocation of the communication means, and transmitting said divided data, and, on the receiving side, the steps of receiving data from said transmitting side, restoring said received data to the initial information, and displaying said restored information. By this method, all of the information data exceeding the limitation can be accurately transmitted and received in case there is a limitation in data size to be transmitted and received at one time.

Also, the present invention provides an information transmitting/receiving method, which comprises said information to be transmitted is a handwritten information or an image information. By this method, handwritten information or image information with large amount of information can be transmitted and received.

Further, the present invention provides an information transmitting/receiving method, which comprises said method comprises the steps of expressing said handwritten information by a set of a start point data and an end point data in case the information to be transmitted is a handwritten information, and expressing a data between said start point data and said end point data by a middle point data and a differential information. By this method, handwritten information can be compressed by data compression, and handwritten information can be transmitted with high efficiency.

### BRIEF DESCRIPTION OF THE DRAWINGS

Fig. 1 is a conceptual drawing to explain an information transmitting/receiving system in a first embodiment of the present invention;
Fig. 2 is a flow chart to explain operating procedure in the first embodiment of the present invention;
Fig. 3 shows drawings of an example of steps of transmission of handwritten information in the first embodiment of the present invention;
Fig. 4 is a block diagram to explain a system in a second embodiment of the present invention;
Fig. 5 is a flow chart to explain operating procedure in the second embodiment of the present invention;
Fig. 6 shows drawings of an example of steps of transmission of handwritten information in the second embodiment of the present invention;
Fig. 7 is a drawing to show an example of route information in the second embodiment of the present invention;
Fig. 8 shows a principle of data compression of a third embodiment of the invention given in form of a table; and
Fig. 9 shows drawings of an events list information of events, image information, and handwritten information in the first embodiment of the present invention.

### BEST MODE FOR CARRYING OUT THE INVENTION

Description will be given below on embodiments of the present invention referring to the drawings.

### (1st Embodiment)

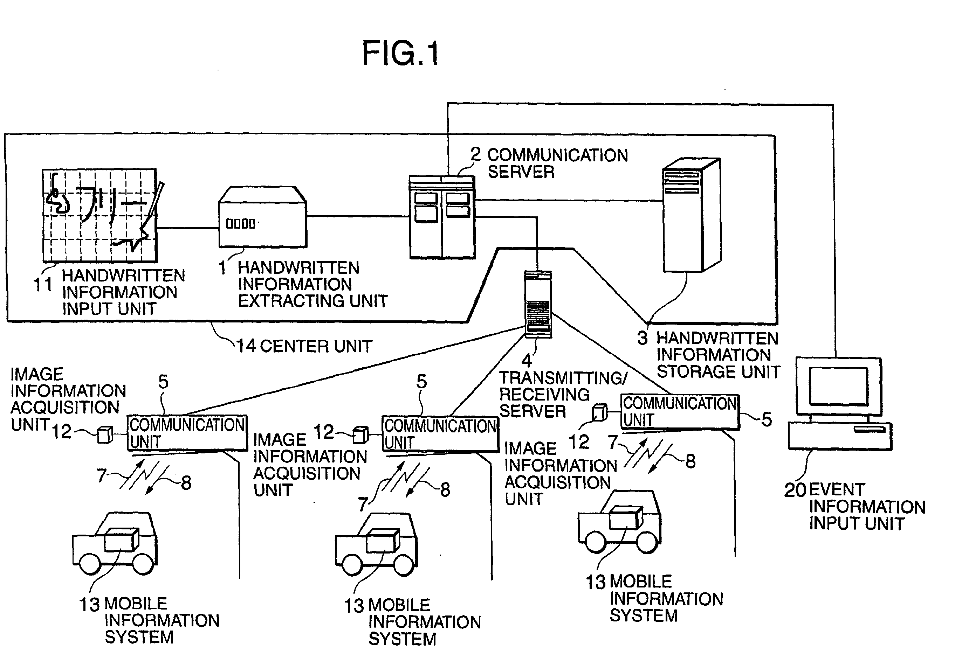

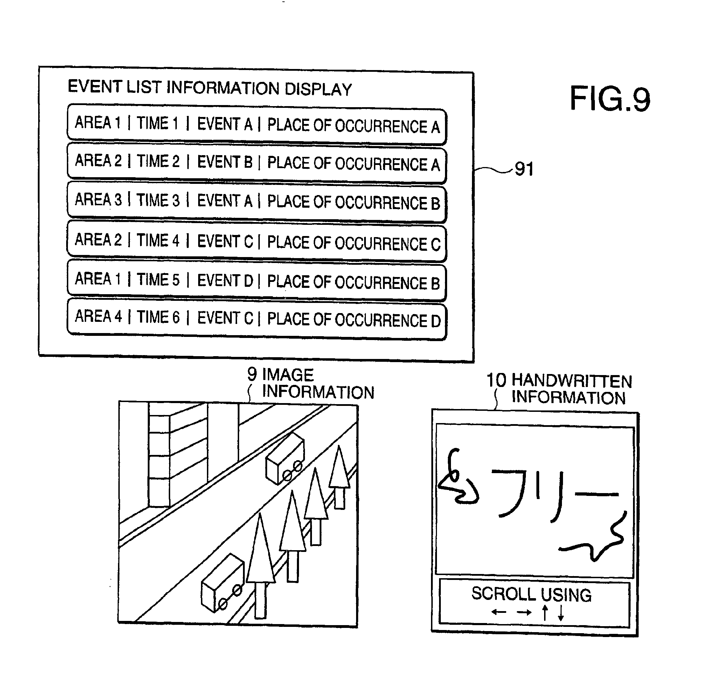

Fig. 1 shows an entire information transmitting/ receiving system in a first embodiment of the present invention. Fig. 9 represents drawings to show a listed information of events, an image information and a handwritten information in the first embodiment of the present invention. In Fig. 1 and Fig. 9, a handwritten information extracting unit 1 comprises a computer system and processes an electric information from a handwritten information input unit 11, and it is provided with a function to deliver an extracted information to a communication server 2.

The handwritten information input unit 11 comprises a digitizer of pressure-sensitive mode, electromagnetic mode, optical mode or ultrasonic mode. A communication server 2 converts and processes various types of information including the handwritten information to a content in a form required for transmission and controls the timing of transmission. A handwritten information storage unit 3 is a magnetic recording unit or an optical recording unit, and stores and picks up the extracted information under the control of the communication server 2. A transmitting/ receiving server 4 allots and transmits the communication information sent from the communication server 2 to a plurality of communication units 5, which serve as communication means. An event information input unit 20 comprises a computer system, and it inputs the input information to be transmitted to a moving person, makes up a list of information, and sends it to the communication server 2.

A center unit 14 comprises the handwritten information extracting unit 1, the communication server 2, the handwritten information storage unit 3 and the handwritten information input unit 11. The handwritten information input unit 11 is used when the currently existing extracted information stored in the handwritten information storage unit 3 cannot be used or when an information of imminent emergency not found in template is to be transmitted from the center unit 14. The communication unit 5 transmits a signal received from a mobile information system 13 or an information acquired by an image information acquisition unit 12 to the transmitting/receiving server 4. It also receives a communication information from the transmitting/ receiving server 4 and transmits it. Using optical beacon or electric wave beacon, an information to match the mobile information system 13 passing through a service area of each communication unit 5 is acquired as an up-going information 7 directed toward the communication server 2 and judges and identifies the information. It also transmits and downloads a necessary information from the center unit 14 to the mobile information system 13 as a down-going information 8 directed toward the mobile information system 13 from the communication server 2.

An image information 9, a handwritten information 10, and an events list information display 91 are examples of information transmitted from the center unit 14 and received by the mobile information system 13. Initial information of the image information 9 is an information incorporated at the image information acquisition unit 12 installed near an intersection, and the information is transmitted to the communication server 2 via the communication unit 5 and the transmitting/receiving server 4. The communication server 2 divides the information to a plurality of data and sequentially transmits the image data to the mobile information system 13 via the transmitting/ receiving server 4 and the communication unit 5. The image information 9 is an image information at a transit point of a mobile object such as a vehicle with the mobile information system 13 installed on it. The image information is, for instance, an image information near an intersection. Initial information of the events list information display 91 is an event information inputted from an event information input unit 20 connected to the communication server 2, and it is transmitted as an events list information to the mobile information system 13 via the transmitting/receiving server 4 and the communication unit 5. The events list information display 91 displays data such as an area where the event has occurred, the time of occurrence, place of occurrence, etc. as a set of event data, and it is arranged in such manner that these event data can be reviewed at the same time.

In the first embodiment, description will be given on a system and a method for transmitting the handwritten information only for once and for displaying the information on the mobile information system. Here, description will be given on a case where the handwritten information is transmitted via optical beacon. There is no substantial difference between the case using electric wave beacon and the case using optical beacon, and only the communication means differs.

When a handwritten information is transmitted from the center unit 14, a necessary information is written by a writing pen on a writing pallet unit of the handwritten information input unit 11 of 800 dots x 600 dots (transverse direction x longitudinal direction). The information is converted to an electric information and this is sent to the handwritten information extracting unit 1. The handwritten information extracting unit 1 of the center unit 14 processes the electric information and transmits the extracted information to the communication server 2. Total data amount of electric information to be written in the handwritten information input unit 11 is about 30 KB.

In general, however, the data amount transmittable at one time via optical beacon is up to 10 KB at the most. Even when the handwritten information with data amount of about 30 KB is compressed by the method generally known, it can be compressed to about 20 KB at the most. Therefore, it is very difficult to transmit the handwritten information at one time by optical beacon. In this respect, a method described below is used, and the handwritten information is transmitted via optical beacon and it is displayed on a display unit of the mobile information system 13.

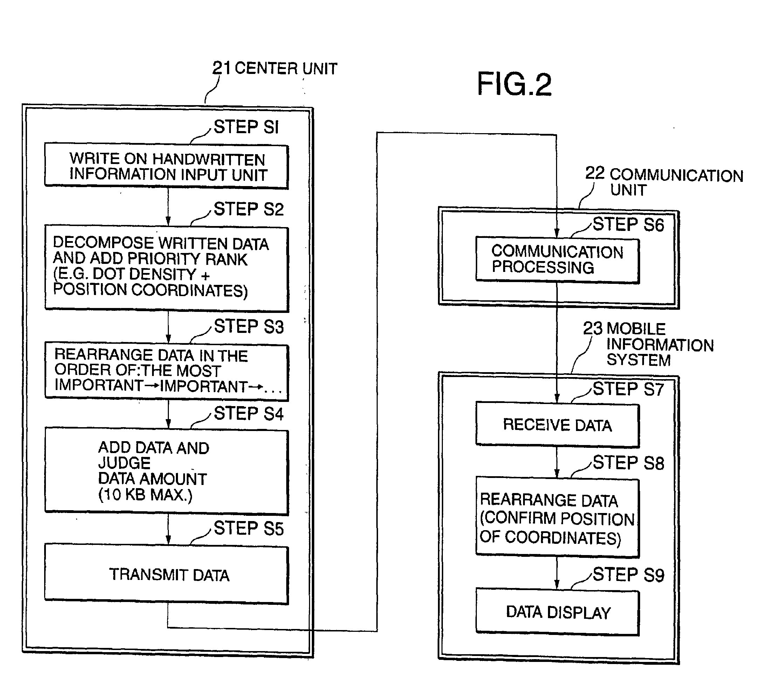

Fig. 2 shows a flow chart of an operating procedure of a method in the first embodiment of the present invention. In this method, a handwritten information is transmitted only at one time from a center unit 21 having the same means as the center unit shown in Fig. 1 and the information is displayed on a display unit of a mobile information system 23.

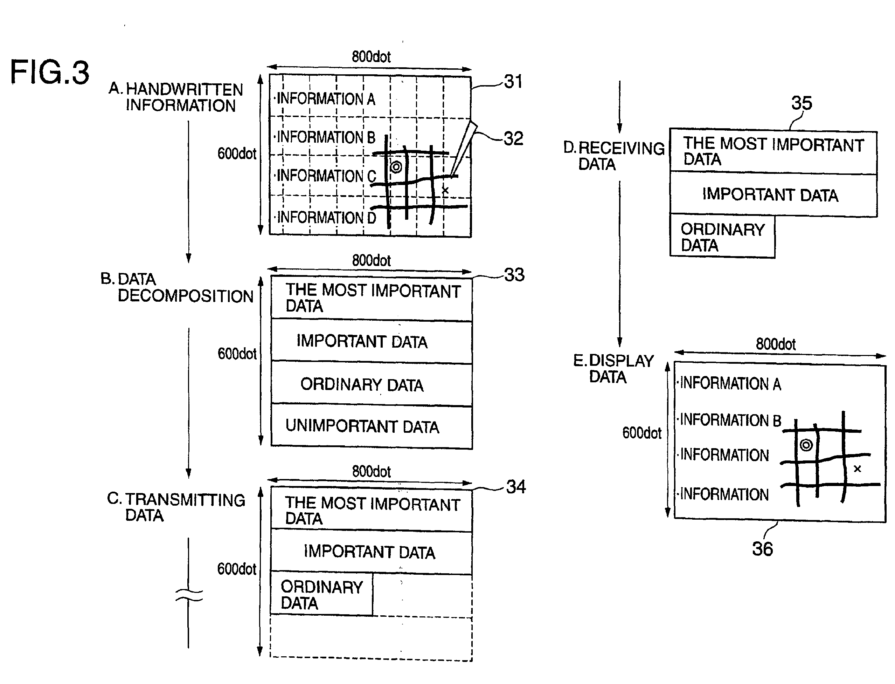

A handwritten information is written using a writing pen on a pallet unit of the handwritten information input unit, which belongs to the center unit 21 (Step S1). In "A. Handwritten Information" in Fig. 3, an example of a handwritten data written by a handwriting pen 32 on a pallet of a handwritten information input unit 31 is shown. On the drawing, characters displayed are shown as characters in print to facilitate the preparation of the drawing. In fact, these characters are handwritten.

In the handwritten information thus written, data are decomposed by the handwritten information extracting unit in the center unit 21, and priority rank is given to each data (Step S2). Fig. 2 shows an example of a method to recognize a portion with higher dot density as the more important portion and to recognize position coordinates closer to the center as more important. However, it is not necessarily limited to this example, and it may be designed in such manner that writing speed to the tablet, writing pressure, etc. are detected and the degree of importance may be recognized.

Next, the handwritten data decomposed and provided with priority rank are rearranged in the order of the priority rank, i.e. the most important → important → ordinary → ......... at the communication server in the center unit 21 (Step S3). In "B. Data Decomposition" of Fig. 3, an example 33 is shown where the data are rearranged in the order of priority rank in four steps, i.e. the most important data, important data, ordinary data, and unimportant data. Here, the steps of priority rank are set to 4 steps, while it is not necessarily limited to 4 steps.

Then, processing of addition of the data to be transmitted and data amount judging processing are performed (Step S4). Data amount is transmitted to the transmitting/receiving server by adjusting to match the data transmission capacity of the optical beacon (Step S5). In this case, data transmission capacity is limited to 10 KB, and the data in the amount beyond this capacity is not transmitted. In "C. Transmitting Data" of Fig. 3, a status 34 of the data of 10 KB to be transmitted is shown. This data is transmitted to the mobile information system 23, which belongs to a mobile object such as individual vehicle by optical beacon from the communication unit 22 via the transmitting/receiving server (Step S6).

The transmitted data is received by the mobile information system 23 belonging to the mobile object such as individual vehicle in a form 35 as shown in "D. Receiving Data" of Fig. 3 (Step S7). The received data are rearranged by processing to restore using coordinate position data written in the handwritten information input means in a processing unit (not shown), which serves as data processing means in the mobile information system 23 (Step S8). Then, the data are displayed on a data display unit (not shown) of the mobile information system 23 (Step S9).

In "E. Display Data" of Fig. 3, an example of a handwritten information 36 displayed on the display unit of the mobile information system is shown. This does not completely agree with the initial data shown in "A. Handwritten Information" of Fig. 3, but the necessary information is reproduced. Here again, the characters are shown in print to facilitate the preparation of the drawing. In fact, the characters are handwritten.

As described above, in the information transmitting/ receiving system and an information transmitting/receiving method in the first embodiment of the present invention, the data of handwritten information or image information are divided and processed with priority rank at the center unit, and necessary and important data are transmitted. For instance, even when the data are transmitted only at one time by communication means such as optical beacon or electric wave beacon, general features of the handwritten or image information can be acquired.

### (2nd Embodiment)

In the second embodiment of the present invention, description will be given on a method and a system for accurately transmitting all of the handwritten information data of about 30 KB in capacity. In this case, the limitation up to 10 KB of the data amount to be transmitted at one time by optical bean is still valid. For the data not transmittable at one time, a method for transmitting the data by two or more times is used.

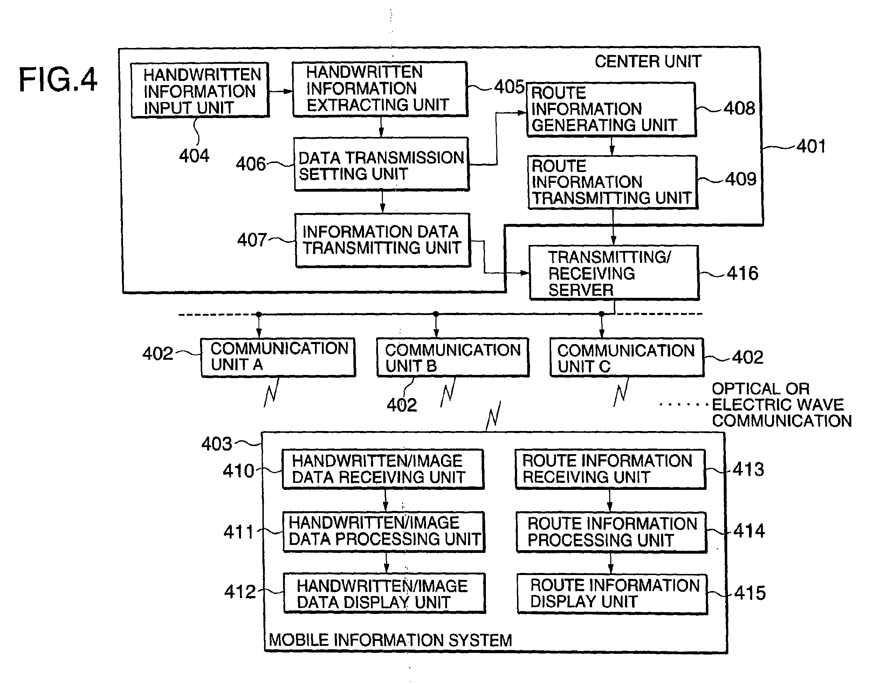

Fig. 4 is a block diagram showing a general outline of a system for transmitting a handwritten information or an image information to a mobile information system 403 installed on a mobile object such as a vehicle via a communication unit 402 from a center unit 401 in the second embodiment of the present invention.

In Fig. 4, a handwritten information input unit 404 is connected to a handwritten information extracting unit 405, and it is used to write the handwritten information on a pallet surface of the handwritten information input unit 404 using a writing pen. The handwritten information data of about 30 KB in capacity are processed by the handwritten information extracting unit 405. The data are further processed by a data transmission setting unit 406 in the center unit 401 and are divided to a plurality of data each in unit of 10 KB in capacity as transmittable at one time to the mobile information system 403 installed on a mobile object such as vehicle via the communication unit 402. Then, the data are transmitted to a plurality of communication units 402 via a transmitting/receiving server 416. Each of the communication units 402 waits for passing of the mobile information system 403. When the mobile information system 403 passes through, the divided handwritten information data are transmitted to the mobile information system 403.

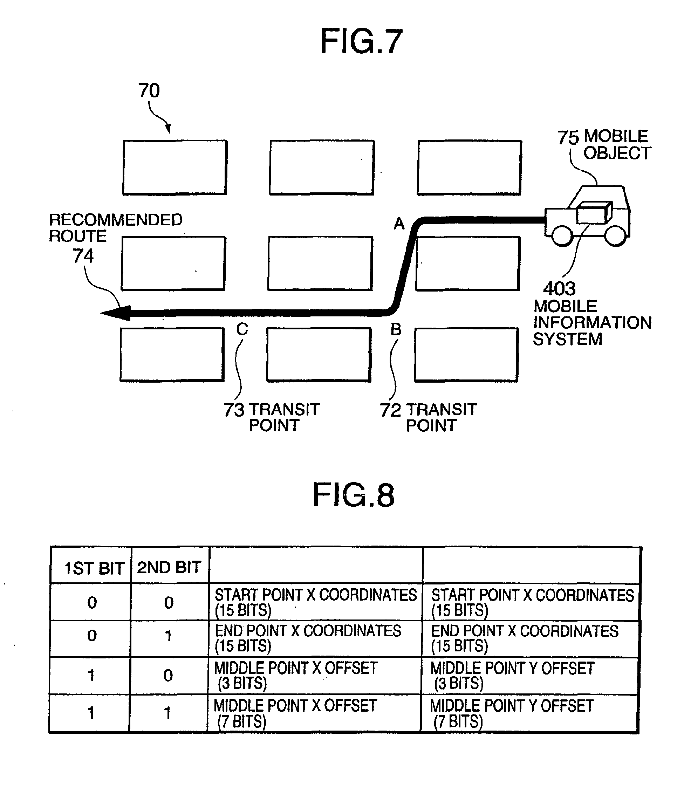

When the data transmission setting unit 406 transmits the divided handwritten information data, it transmits position information of the communication unit 402 to a route information generating unit 408. The route information generating unit 408 generates a route information based on the position information of the present position and the destination of the mobile information system 403 and also on the position information of a plurality of communication units 402. For instance, when the handwritten information is transmitted in three times as shown in Fig. 7, a recommended route 74 is generated, along which a mobile object 75 such as vehicle passes through three locations A, B, and C one after another where communication units 402 are installed. This route information is sent to a route information transmitting unit 409 in the same center unit 401 and is transmitted from the communication unit 402 via the transmitting/receiving server 416.

The information received at the route information receiving unit 413 in the mobile information system 403 installed on the mobile object is processed by a route information processing unit 414 and is transmitted to a route information display unit 415 as a recommended route display means in a form 70 of a map as shown in Fig. 7. The mobile object such as vehicle moves according to the route information and receives the handwritten information divided at the locations A, B, and C of the communication units 402 where the vehicle passes through one after another, and the divided information is received at the handwritten/image data receiving unit 410. The received data are processed at the handwritten/image data processing unit 411 and are displayed on the handwritten/image data display unit 412.

The handwritten data to be received are accumulated in the order of passing the locations A → B → C where the communication units 402 are installed. The information from the communication unit A installed at the first transit point is incomplete, and information is obtained from the locations B and C of the communication units 402 installed at transit points 72 and 73. As the vehicle passes through the transit points 72 and 73, the handwritten information written in the initial handwritten information input unit 404 is promptly displayed at the transit point 73, and a route information to the destination is promptly displayed.

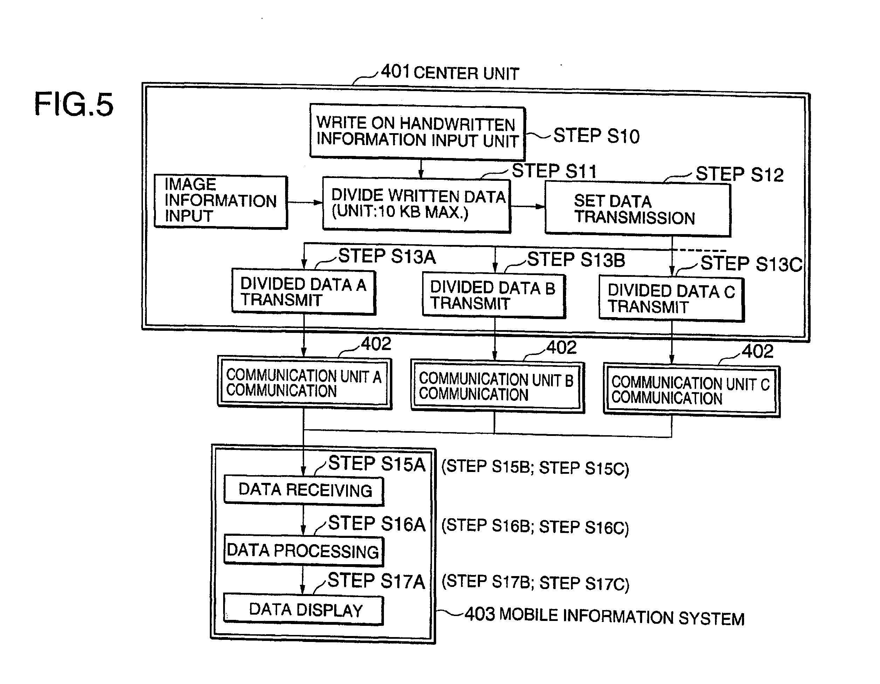

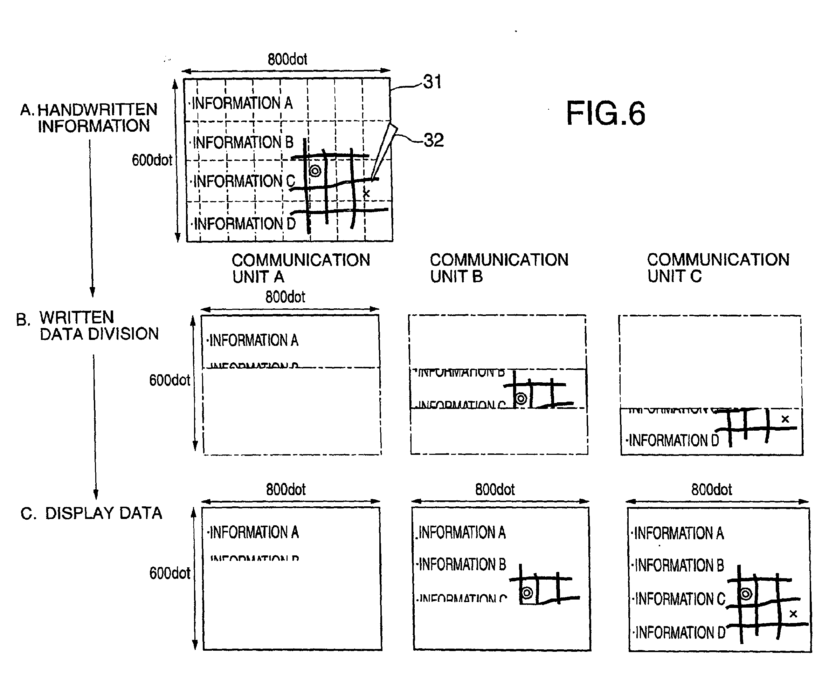

Next, description will be given on the transmitting/ receiving procedure of the handwritten/image information in the second embodiment based on the flow chart of Fig. 5. As shown in "A. Handwritten Information" of Fig. 6, information is written on a pallet surface 31 of the handwritten information input unit 404 connected to the handwritten information extracting unit 405 (Step S10). The written data has a capacity of 30 KB and this cannot be transmitted at one time via the communication units 402, and the data is divided to 3 sets of data each having capacity of 10 KB at the most on the handwritten information extracting unit 405 (Step S11). The information in "A. Handwritten Information" of Fig. 6 is divided to a divided data A, a divided data B, and a divided data C in "B. Written Data Division" of Fig. 6. In Fig. 6 again, the characters are shown in print to facilitate the preparation of the drawing. In fact, the characters are handwritten.

The data transmission setting unit 406 performs data transmission setting to set a timing to transmit the data and to set locations where a plurality of communication units are to be installed (Step S12). The divided data A, B and *C* are sent to communication units 402A, 402B and 402C via the transmitting/receiving server 416 from the information data transmitting unit 407, and passing of the mobile information system 403 is waited (Steps S13A, S13B, and S13C). When the mobile object such as vehicle passes through the location A where the communication unit 402 is installed, the divided data A is transmitted by optical beacon (Step S13A), and the data are received by the handwritten/image data receiving unit 410 of the mobile information system 403 (Step S15A). The received data are processed by the handwritten/image data processing unit 411 (Step S16A) and are displayed on the handwritten/image data display unit 412 (Step S17A). In this case, only a portion of the divided data A is displayed as shown at the left part of "C. Display Data" of Fig. 6.

When the mobile object such as vehicle passes near the location B where the communication unit 402 is installed, it is notified that the divided data A has been already transmitted according to the information from the data transmission setting unit 406. The divided data B is transmitted by optical beacon (Step S13B), and it is received by the mobile information system 403 on board of the vehicle (Step S15B). Then, the data is processed (Step S16B), and the processed data is displayed as the handwritten information (Step S17B). In this case, "the divided data A + the divided data B" are displayed as shown at the central part of "C. Display Data" of Fig. 6.

Further, when the mobile object such as vehicle passes near the location C where the communication unit 402 is installed, the divided data C is transmitted via optical beacon (Step S13C) and is received by the mobile information system 403 on board of the vehicle (Step S15C). The data is processed (Step S16C), and the processed data is displayed as a handwritten information (Step S17C). Only at this time point, the handwritten information data in its entirety is accurately displayed as shown on the right part of "C. Display Data" of Fig. 6. In the system and the method as described here, information data is transmitted and received in the order of the locations where optical or electric wave transmitters are installed, while it is possible to transmit and receive the information not in the defined order by changing the data processing of the mobile information system 403. Further, the mobile information system 403 can receive the divided data A, B or C at other location nearby without being limited by the locations A, B and C where the communication units 402 are installed.

As described above, the handwritten information data of about 30 KB in capacity is divided to a plurality of data each having a capacity not exceeding 10 KB at the highest and is transmitted and received in the divided units. As a result, contents of the information can be accurately displayed on the mobile object even when the information is transmitted or received by the communication unit. In the second embodiment, description has been given on a method to transmit the information by dividing the data to three parts. Even when an image of larger capacity is to be transmitted or received, the information can be divided to four or more parts and can be transmitted from the center unit by four or more times. The data can be received by the mobile object such as vehicle, and the image can be accurately displayed.

Regarding the format of the information data, description has been given with bit map format on the drawing in mind. If the data processing unit is provided with the function to process the data of compression vector format, it is possible to transmit and receive the information of different data format. Further, when the information received by the mobile information system as explained here is displayed in combination with map information of a map display unit, detailed map can be displayed, and this would contribute to the better understanding of geographical relationship. Also, if the handwritten or the image information received by the mobile information system as explained here is displayed in combination of the recommended route information sent from the center unit, it will be more easily understandable how necessary information can be accurately received and which route should be taken for this purpose.

### (3rd Embodiment)

In the first embodiment of the present invention, description has been given on the system and the method, in which handwritten or image information data are divided and rearranged with priority rank, and only the data in priority rank are put together each to have a capacity not exceeding 10 KB and data are transmitted and received at one time. In the second embodiment of the present invention, description has been given on the system and the method, in which handwritten or image information data are divided into a plurality of data each with a capacity not exceeding 10 KB as a unit and data are transmitted and received in two or more times, and the handwritten or image information can be accurately displayed. In the following, as a third embodiment of the present invention, description will be given on a method for compressing the data of the handwritten information using a new algorithm.

Handwritten data may be regarded as a series of start point data and end point data. When a certain point of the series of these data is expressed, 4 bytes are required as data capacity. However, in case of handwritten information data, if we consider a middle point in addition to two types of data, i.e. start point data and end point data as the types of data, the data at the middle point can be expressed by the data of a difference between the start point and the end point. Therefore, it is possible to decrease the data amount as differential data, and 4 bytes are not needed to express one point, and the data can be compressed. In this method with the middle point in mind, four types of data, i.e. start point coordinates, middle point coordinates, end point coordinates, and differential information are used. To assort these four types of information, two bits are allocated, i.e. the first bit and the second bit in the data region are allocated.

In Fig. 8, data structures of the four types of information are summarized. In Fig. 8, in the columns of 1st bit and 2nd bit, data capacity to express the start point coordinates, the end point coordinates, the middle point coordinates, and the differential information are shown in the number of bits. For the start point and the end point, data region of 4 bytes is required to express one point. Because there are X coordinate and Y coordinate for each case, data region contains 2 bytes for X coordinate and 2 bytes for Y coordinate. Two bytes are equal to 16 bits, and two bits are used for one point for the assortment of the type of information. As a result, regions of 15 bits are required respectively for X coordinate and Y coordinate for each of the start point and the end point. Also, the middle point X coordinate and the middle point Y coordinate, X coordinate difference and Y coordinate difference require regions of 7 bits and 3 bits respectively as offset. Therefore, if the middle points are supposed to be a middle point 1 and a middle point 2 and differential information is used, the middle point 1 can be expressed by 2 bytes (16 bits), and the middle point 2 can be expressed by 1 byte (8 bits).

Next, description will be given on data compression in case the handwritten data are actually sampled. If sampling of the handwritten data is performed at 700 points, data amount will be: 700 x 4 bytes = 2800 bytes if the conventional method employing the start point data and the end point data is used.

In the compression method based on the new algorithm as explained here, sampling is performed by allocating 50 points, 300 points, 300 points and 50 points respectively for the start point, the middle point 1, the middle point 2, and the end point. In this case, the required data amount at the start point is: 50 x 4 bytes = 200 bytes. The required data amount at the middle point 1 is: 300 x 2 bytes = 600 bytes. The required data amount at the middle point 2 is: 300 x 1 byte = 300 bytes. The required data amount at the end point is: 50 x 4 bytes = 200 bytes. When these are summed up: 200 bytes + 600 bytes + 300 bytes + 200 bytes = 1300 bytes. This means that the data can be compressed to less than one-half compared with the data capacity of 2800 bytes, which is required when the data are not compressed. Therefore, when the data are divided to three parts as explained in the second embodiment, the data can be divided to 2 parts if the data amount is taken into account, and this contributes to the reduction of the time to transmit and receive the handwritten information.

As described above, in the information transmitting/ receiving system, the information transmitting/receiving method and the method for compressing the handwritten information used in the system and the method as proposed in the third embodiment of the present invention, the handwritten information is compressed by simple algorithm and transmitted according to a principle that the data of a middle point can be expressed by a difference of the data between a start point and an end point before and after the middle point respectively. As a result, without changing the processing capability of the communication server of the center unit, handwritten or image information can be efficiently transmitted.

### INDUSTRIAL APPLICABILITY

As described above, it is possible according to the present invention to provide an information transmitting/ receiving system, an information transmitting/receiving method, and a method for compressing handwritten information used in the system and the method because handwritten information or image information can be transmitted and received by dividing the handwritten information or the image information at a center unit and by transmitting the information to a mobile information system via a communication unit.

## Claims

1. An information transmitting/receiving system, comprising a center unit, said center unit comprising handwritten information input means for converting a handwritten information to an electric information, handwritten information extracting means for extracting a necessary part from said electric information converted by said handwritten information input means, a communication server for processing the extracted information extracted by said handwritten information extracting means, and handwritten information storage means for storing said extracted information extracted by said handwritten information extracting means under control of said communication server, said information transmitting/ receiving system further comprising a transmitting/ receiving server connected to said communication server, communication means on a passage connected to said transmitting/receiving server, and a mobile information system for receiving a communication information from said center unit via said transmitting/receiving server and said communication means, whereby said extracted information is divided to a plurality of data at said communication server and is transmitted to said communication means via said transmitting/receiving server as said communication information, and said mobile information system receives said communication information.

2. The information transmitting/receiving system according to claim 1, wherein an image information taken by image information acquisition means installed at a plurality of locations is stored in said communication server via said communication means and said transmitting/ receiving server, said image information is divided to a plurality of data by said communication server and is transmitted to said communication means via said transmitting/receiving server as said communication information, and said mobile information system acquires said image information by receiving said communication information.

3. The information transmitting/receiving system according to claim 1, wherein said communication server divides said extracted information and sequentially transmits said information from a plurality of said communication means in a predetermined order via said transmitting/receiving server, and said mobile information system receives from said communication means said communication information transmitted from said center unit via said communication means according to the order of transmission.

4. The information transmitting/receiving system according to claim 1, wherein said communication server divides said extracted information and transmits in an arbitrary order the information from a plurality of said communication means, said mobile information system receives said communication information from said center unit, and said mobile information system restores said communication information.

5. The information transmitting/receiving system according to claim 1, wherein said handwritten information extracting means decomposes said electric information converted by said handwritten information input means, and recognizes degree of importance of each of the decomposed data.

6. The information transmitting/receiving system according to claim 1, wherein said handwritten information extracting means converts and processes said electric information converted by said handwritten information input means either to bit map format or to compression vector format, and the information is outputted to said communication server as said extracted information.

7. The information transmitting/receiving system according to claim 1, wherein map display means is provided on said mobile information system, at least one of a map data possessed by said map display means or a map data acquired via the communication means is combined with said communication information received by said mobile information system, and the combined information is displayed on said mobile information system.

8. The information transmitting/receiving system according to claim 1, wherein said center unit transmits a recommended route information for sequentially receiving said communication information divided to a plurality of data via said transmitting/receiving server and said communication means, and said mobile information system combines said communication information with said recommended route information and displays the combined information on said mobile information system.

9. The information transmitting/receiving system according to claim 1, wherein said handwritten information input means expresses a handwritten information by said handwriting input by a set of a start point data and an end point data and further expresses a data between said start point data and said end point data by a middle point data and a differential information, and said handwritten information is converted to said electric information.

10. The information transmitting/receiving method, comprising, on the transmitting side, the steps of decomposing an information to be transmitted to a plurality of data, adding priority rank to said decomposed data and rearranging the data, adding said decomposed data and judging which of the added data and a preset data amount is larger, and transmitting the decomposed data to an extent not to exceed the preset data amount, and, on the receiving side, the steps of receiving data from said transmitting side, rearranging and restoring and processing the received data to an information closer to the decomposed initial data, and displaying said restored information.

11. The information transmitting/receiving method, comprising, on the transmitting side, the steps of dividing an information to be transmitted to a set of a plurality of data, setting a timing to transmit said divided data to a plurality of communication means and setting allocation of the communication means, and transmitting said divided data, and, on the receiving side, the steps of receiving data from said transmitting side, restoring said received data to the initial information, and displaying said restored information.

12. The information transmitting/receiving method according to claim 10 or 11, wherein said information to be transmitted is a handwritten information or an image information.

13. The information transmitting/receiving method according to claim 10 or 11, wherein said method comprises the steps of expressing said handwritten information by a set of a start point data and an end point data in case the information to be transmitted is a handwritten information, and expressing a data between said start point data and said end point data by a middle point data and a differential information.

14. A method for compressing a handwritten information in information input means for converting a handwritten information to an electric information, said method comprising the steps of expressing said handwritten information by a set of a start point data and an end point data, and expressing a data between said start point data and said end point data by a middle point data and a differential information.
